# EUROPEAN PATENT SPECIFICATION

(11) **EP 1 273 715 B1**
(45) Date of publication and mention of the grant of the patent: **12.01.2005**
(21) Application number: 01116007.4
(22) Date of filing: 02.07.2001
(51) Int. Cl.: E02D 3/12, E04B 1/68, F16K 15/14

(54) **Injection pipe with valves and process for production**
Injektionsventilrohre und ihr Herstellungsverfahren
Tuyau d'injection à valves et son procédé de fabrication

(43) Date of publication of application: 08.01.2003
(73) Proprietor: Elas Geotecnica S.r.l., Segrate S. Felice (MI) (IT)
(72) Inventor: Bonomi, Cristiano, 20090 Segrate (Milan) (IT)
(74) Representative: Gervasi, Gemma, Dr.

(56) References cited:
- DE-A- 3 428 549
- DE-A- 4 106 839
- DE-A- 19 632 982
- DE-U- 8 915 525
- DE-U- 29 612 245

## Description

### FIELD OF THE INVENTION

The present invention concerns the field of civil engineering, and it particularly concerns a process for the production of a pipe with valves for ground consolidation injections, and the pipe made by means of the aforesaid process.

### PRIOR ART

The applications concerning industrial engineering have remarkably evolved during these last years.

Among several applications foreseen in industrial engineering, the processes and equipments used for ground consolidation have recently experienced a great expansion and development.

These modern techniques comprise the so-called consolidation injections which are tipically used for applications such as, for example, the consolidation of large working faces in loose clayey soils, the making of dams and tunnels, the anchoring of structural tie-beams, etc.

Consolidation injections are usually carried out by means of a plurality of deep holes in the soil wherein it is then inserted a pipe, usually made of a plastic material, and wherein some liquid concrete or suitable mixtures are injected under pressure, which, coming out from radial holes or openings, equidistant in the pipe, spreads and penetrates in the surrounding soil.

In particular, said pipe is usually made of rigid shock-resistant PVC and it is available with a wide range of diameters and thicknesses in order to fit different capacity loads and pressures. Said pipe is generally provided with a plurality of groups of radial holes, each of them being formed by, for instance, four holes having a 4-8 mm diameter at a pre-arranged distance: for each group of holes corresponding external valves are provided, which are said "manchette valves" and which work as nonreturn valves, since they open under the effect of injection pressure, thus allowing the injected liquid concrete to come out of the pipe and to spread into the surrounding soil, and they are then hermetically closed when the pressure stops in order to avoid water and/or concrete to come back inside the pipe.

Till recent years the field of application of these injections was limited to the consolidation of very permeable soils, such as gravel or cracked rocks, and the injected mixtures were substantially limited to water-concrete mixtures possibly stabilized by adding clay or bentonite.

But nowadays, mainly thanks to some new injection techniques and to the development of chemistry with regard to mixtures, injections are carried out in several steps, with mixtures especially studied for the specific soil permeability at the considered depth, and with bi-component mixtures reacting in soil; this allows the realization of consolidations and anchoring for tie-beams in soils having an average or low permeability.

The continuous increase of possible application encourages the development of extraction techniques, with a particular attention to costs and simplicity of installation of the aforesaid pipes with valves used for these injections.

The working depth is often remarkable (several dozens of meters) and therefore the pipe to be inserted in said deep holes is formed by several pipe pieces which are axially connected and, as said before, each hole for the outlet of the mixture (or at least each group of holes) needs some valves which must be efficient, cheap and handy to be mounted.

Among several possible valves, the so-called "manchette" or nonreturn valves represent the most used and preferred solution.

Unfortunately, said valves,-although undoubtedly efficient, have the remarkable disadvantage of being expensive and having a difficult and expensive installation, and are therefore unsuitable to be assembled on the field.

It is known from DE-A-19632982 a process for the production of a pipe with valves for ground consolidation injections, the pipe comprising a pipe body of thermoplastic material, with a plurality of through-holes in a plurality of areas of the body at a pre-arranged distance. The process for the production of the valves over the pipe consists in applying portions of sheath of elastic material by shrinking, leaving other portions of the pipe free, not covered by elastic valves.

This creates the problem that the valves can slide along the pipe, due to the following effects: first, the end portions of each valve form a step over the pipe; when the pipe is let enter the hole in the soil, the friction against the soil can cause the valves slide or roll over the pipe, so as some through-holes of the pipe remain uncovered; second, the valves are not rested against each other, due to the distance between them over the pipe; when the mixture exits the pipe through-holes, it slides axially in between the pipe and the valves. This also can cause the valves slide over the pipe, due to that distance.

In both cases, at least some of the through-holes are let free, uncovered, and the mixture solidifies over them, rendering the pipe unusable. Therefore the valves made of portions of shrinked sheath can not ensure the behaviour as non-retum valve.

It is a main object of the present invention to overcome the drawbacks of the known solutions and to propose a process for the production of a pipe with efficient nonretum valves, said pipe being remarkably less expensive than those presently in use, being easy to be produced and to be used, as well as a pipe with valves made by means of said process.

### SUMMARY OF THE INVENTION

The present invention achieves the aforesaid results by means of a process for the production of a pipe with valves for ground consolidation injections of the type having a pipe body, made by extrusion of a thermoplastic material, whose wall is provided with a plurality of through holes for the outlet of liquid mixtures injected under pressure inside the pipe body and concentrated in a plurality of areas of the pipe body, said holes in the pipe body being repeated in successive areas of the pipe body having a pre-arranged distance, characterized in that it comprises the steps of: applying on the external surface of the pipe body a.continuous sheath by means of co-extrusion or pull-trusion on the external surface of said pipe body; before and respectively after each group of holes on the pipe body, circumference through-slots are carried out on said continuous sheath, in order to obtain elastic sleeves surrounding and closing said holes.

It is also an object of the present invention to provide a corresponding pipe for ground consolidation injections; cf. independent claim 6.

Each (part of) sheath forms a valve which is able to elastically open under the hydraulic pressure generated by the pressurized mixture and to close, thus blocking the outlet holes, when the hydraulic pressure from the mixture inside the pipe stops, thus producing a nonreturn valve for the holes or openings placed in the underlying part of the pipe body.

### LIST OF DRAWINGS

The present invention will be better described with reference to a non-limitative embodiment shown in the alleged figures, wherein:
figure 1 schematically shows a cross-section of the process of co-extrusion of a pipe with valves according to the present invention;
figures 2a and 2b show, respectively, a longitudinal axial section and a transversal section of the pipe obtained by means of the process of figure 1;
figure 3 schematically shows how the pipe with valves of figure 2 opens;
figures 4a, 4b and 4c show a cross-section of a variation of the process described in figure 1.

In the alleged figures, the corresponding elements will be identified by means of the same reference numerals.

### DETAILED DESCRIPTION

The process according to the present invention for the production of a pipe with valves for ground consolidation injections of the type having a pipe body, made by means of extrusion of a thermoplastic material, whose wall is provided with a plurality of through holes for the outlet of liquid mixtures injected under pressure inside the pipe body and concentrated in a plurality of areas of the pipe body, said holes being repeated in successive areas of the pipe body having a pre-arranged distance, comprises at least the step of applying on the external surface of the pipe body, at least close to each group of holes, a sheath made of elastic material. Advantageously, the through holes on the pipe body are made simultaneously with the extrusion of the pipe body.

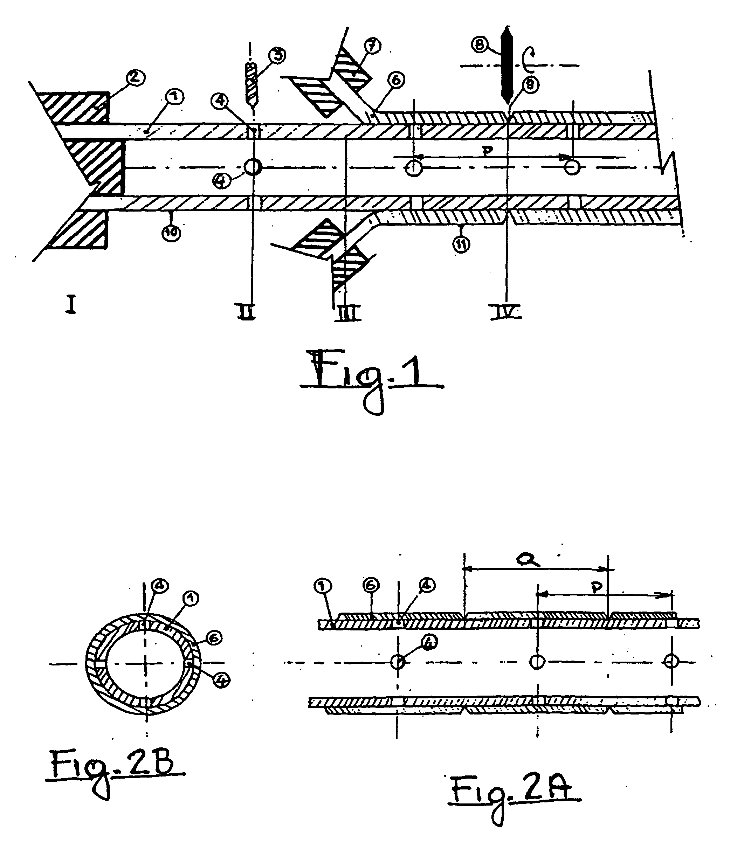

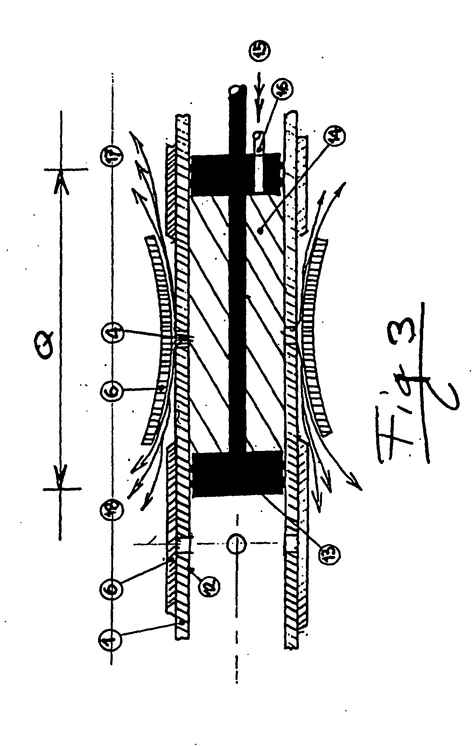

Figure 1, schematically showing a first embodiment of the process for the production of a pipe with valves according to the present invention, shows a first step (I) wherein a first extruder 2 produces the pipe body 1 made of plastic material with the preferred dimensions; a second step (II) wherein one or more drills 3 carry out in the wall of the pipe body 1 a group of through holes 4 having a pre-arranged distance P (figure 2a); a third co-extrusion step (III) of a thin layer of a plastic flexible material made by means of a second extruder 7 in order to produce a sheath 6 surrounding the pipe body 1 provided with holes; and a fourth step (IV) wherein (before, respectively after each group of holes on pipe body 1) circumference slots 9 are carried out, which are as deep as the whole thickness of the sheath 6, in order to obtain an elastic sleeve covering the area of pipe 1 with holes 4 and which acts as a nonreturn valve or "manchette valve", as it is better explained in the following figure 3.

Preferably, sheath 6 is made of a synthetic, elastic resin having a thickness comprised between 1.5 and 3 mm.

Without departing from the scope of the present invention, the pipe body 1 can be made of extruded PVC and sheath 6 can be made of glass-fibre strengthened by means of and extrusion called "pull-trusion".

In figures 2a and 2b it is shown the pipe with valves produced by means of the process described in figure 1, wherein it is possible to notice how holes 4, grouped in particular areas, have a distance P, whereas the width of the overhanging sleeve closing holes 4 extends for a width Q which has been selected so that each sleeve forms a valve for the underlying injection holes 4.

Figure 2b shows a cross section of the pipe with valves, also showing the pipe body 1 having holes 4 and the co-extruded elastic sheath 6.

Figure 3 explains the working principle of sleeve 6; in particular, it can be noticed that, when the mixture is selectively injected in one of the areas with holes by means of the device 13, axially sliding inside pipe body 1 through chamber 14 connected to pipe 16, which, on its turn, is fed by pump 15 (not shown), the mixture passes through holes 4 and comes outside pipe body 1 thanks to the temporary elastic widening of sleeve 6, allowing the mixture to come out in the directions indicated by the numerals 17 and 18.

When the injection pressure stops, sleeve 6 elastically comes back to its original position, thus effectively closing all holes 4 provided in the underlying bored area; once this step is over, the device 13 continues to move inside pipe body 1 till it reaches the following bored area and repeats the injection.

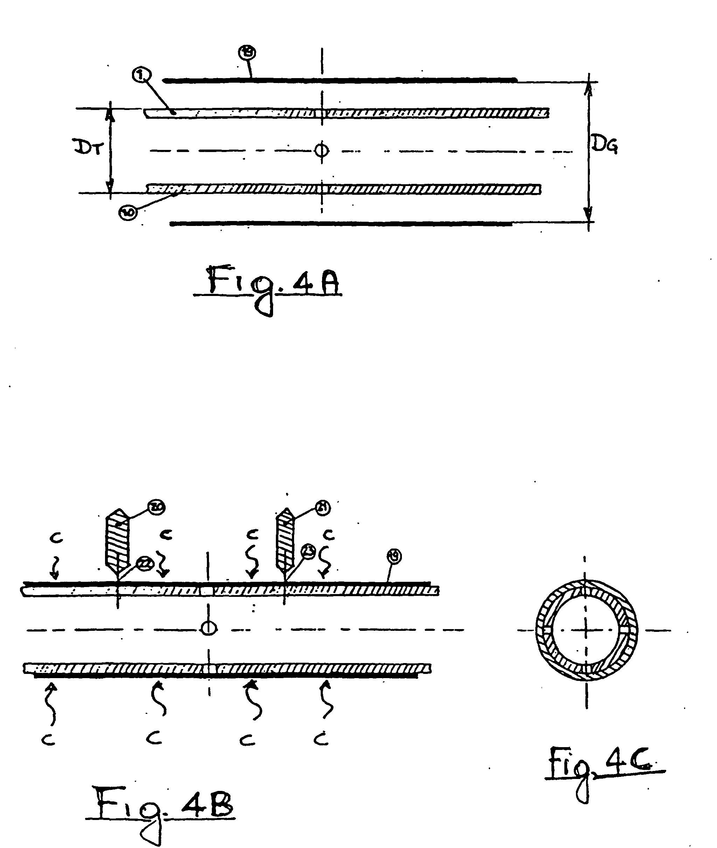

In figures 4a, 4b and 4c it is represented a process which is an alternative to the one previously described, wherein the same result is obtained by inserting on a pipe body 1 made of PVC and suitably bored (analogously to the one resulting from the first two steps of figure 1) a sheath of heat-shrinkable material 19 having, when it is not deformed, a diameter DG bigger than the external diameter of pipe body 1, then evenly heating sheath 19, which shrinks till it wraps pipe body 1, and carrying out on sheath 19 the slots (22, 23) by means of cutters (20, 21) working as described with a reference to figure 1 in order to produce, as explained in figure 4c, a pipe identical to the one previously described with a reference to figures 1-3.

A remarkable further alternative to the aforesaid processes, not shown in the alleged figures, is represented by pipes with valves wherein the sheath made of elastic material is only applied on each bored area and therefore has a limited length; in this case the cutting step is avoided, since the sheath is not continuous.

If a sheath 6 is made by co-extrusion, said co-extrusion is carried out at the same time of the advancing of pipe 1 so that sheath 6 is only extruded only along each bored area, whereas, if a heat-shrinkable sheath 19 is applied, a plurality of pieces of sheath having a limited length is inserted on the pipe body 1, each piece being placed and shrunk so that it covers a bored area.

Furthermore, an object of the present invention is a pipe for consolidation injections made according to the aforesaid process.

A pipe for consolidation injections made according to the process described in figure 1 comprises a pipe body 1 (obtained by means of extrusion of a plastic material) having a plurality of holes 4 concentrated in some areas of pipe body 1 and a sheath 6 made of an elastic material, applied by means of co-extrusion on the external surface of the pipe body 1 and divided by means of circumference slots 9 (as deep as the whole thickness of sheath 6) into a plurality of sheath pieces 6, each of them covers a bored area of pipe body 1 in order to obtain a valve allowing the outlet of the mixture by elastic dilation induced by the hydraulic pressure produced by the pressurized mixture and then hermetically closing when the elastic pressure stops.

According to an alternative embodiment, sheath 6 applied by means of co-extrusion is provided only in relation to the bored areas of pipe body 1.

A pipe for consolidation injections realized according to the process described in figure 4 comprises a pipe body 1 (obtained by extrusion of a plastic material) having a plurality of holes 4 grouped in some areas of pipe body 1 and a sheath 19 made of heat-shrinkable material having an internal diameter bigger than the external diameter of pipe body 1, inserted on pipe body 1, evenly heated so that said sheath shrinks on the external surface of pipe body 1, and divided by means of circumference slots 22, 23 as deep as the whole thickness of the sheath 19 into a plurality of pieces of sheath 19, each of which covers a bored area of pipe body 1 in order to form a valve allowing the outlet of the mixture by elastic dilation induced by the hydraulic pressure generated by the pressurized mixture and then hermetically closing when the elastic pressure stops.

According to an alternative embodiment, the pieces of sheath 19 are provided only in relation to the bored areas of pipe body 1.

From the aforesaid it is clear that the present invention achieves its objects, and particularly allows the production of a cheap and efficient pipe with valves.

It is clear that the indicated materials and the described solutions are given exclusively as an example, and therefore, without leaving the scope of the invention as defined in the claims, it is possible to make all modifications and/or improvements suggested by a person skilled in the art.

## Claims

1. Process for the production of a pipe with valves for ground consolidation injections of the type having a pipe body (1), made by extrusion of a thermoplastic material, whose wall is provided with a plurality of through holes (4) for the outlet of liquid mixtures injected under pressure inside the pipe body (1) and concentrated in a plurality of areas of the pipe body (1), said holes in the pipe body (1) being repeated in successive areas of the pipe body (1) having a pre-arranged distance,
**characterized in that** it comprises the steps of:
- applying on the external surface of the pipe body (1) a continuous sheath (6), by means of co-extrusion or pull-trusion, on the external surface of said pipe body (1);
- before and respectively after each group of holes on the pipe body (1), circumference through-slots (9) are carried out on said continuous sheath (6), in order to obtain elastic sleeves surrounding and closing said holes (4).

2. Process for the production of a pipe with valves according to claim 1, **characterized in that** in case of co-extrusion, said sheath (6) is made of elastic material, preferably a synthetic elastic resin.

3. Process for the production of a pipe with valves according to claim 1, **characterized in that** in case of pull-trusion, said sheath (6) is made of a strengthened glass-fibre.

4. Process for the production of a pipe with valves according to claim 2, **characterized in that** said sheath (6) has a thickness comprised between 1.5 and 3 mm.

5. Process for the production of a pipe with valves according to claim 1, **characterized in that** the through holes (4) of said pipe body (1) are made simultaneously with the extrusion of said pipe body (1).

6. Pipe for ground consolidation injections comprising a pipe body (1), obtained by extrusion of a plastic material, having a plurality of holes (4) grouped in some areas of a pipe body (1), **characterized in that** it further comprises
a sheath (6) continuously applied on the extemal surface of said pipe body (1) by co-extrusion or pull-trusion, and divided by means of circumference through-slots (9) into a plurality of sheath pieces (6), each of them covering a bored area of said pipe body (1) in order to obtain a valve allowing the outlet of the mixture by elastic dilation induced by the hydraulic pressure produced by the pressurized mixture and then hermetically closing when the elastic pressure stops.

7. Pipe according to claim 6, **characterized in that** in case of co-extrusion, said sheath (6) is made of elastic material, preferably a synthetic elastic resin.

8. Pipe according to claim 6, **characterized in that** in case of pull-trusion, said sheath (6) is made of a strengthened glass-fibre.

9. Pipe according to claim 7, **characterized in that** said sheath (6) has a thickness comprised between 1.5 and 3 mm.

## Patentansprüche

1. Verfahren zur Herstellung einer Röhre mit Ventilen für Injektionen zur Untergrundstabilisierung vom Typ mit einem Röhrenkörper (1), hergestellt durch Extrusion eines thermoplastischen Materials, dessen Wand mit einer Vielzahl von Löchern (4) versehen ist, um als Austritt für die flüssigen Mischungen zu dienen, welche unter Druck in den Röhrenkörper (1) injiziert und in mehreren Bereichen des Röhrenkörpers (1) konzentriert werden, wobei die genannten Löcher in dem Röhrenkörper (1) wiederholt in nacheinander folgenden Bereichen des Röhrenkörpers (1) mit einem vorgegebenen Abstand angeordnet sind, **dadurch gekennzeichnet, dass** es die folgenden Schritte umfasst:
- Aufbringen einer durchgehenden Ummantelung (6) auf der äußeren Oberfläche des Röhrenkörpers (1) mithilfe von Co-Extrusion oder Pull-Extrusion an der äußeren Oberfläche des genannten Röhrenkörpers (1);
- vor beziehungsweise nach jeder Gruppe von Löchern auf dem Röhrenkörper (1) werden auf der genannten durchgehenden Ummantelung (6) um den Röhrenkörper verlaufende Durchgangsschlitze (9) angebracht, um somit elastische Manschetten zu erhalten, die die genannten Löcher (4) umgeben und abschließen.

2. Verfahren zur Herstellung einer Röhre mit Ventilen gemäß Anspruch 1, **dadurch gekennzeichnet, dass** im Falle von Co-Extrusion die genannte Ummantelung (6) aus elastischem Material, vorzugsweise synthetischem elastischem Harz hergestellt ist.

3. Verfahren zur Herstellung einer Röhre mit Ventilen gemäß Anspruch 1, **dadurch gekennzeichnet, dass** im Falle von Pull-Extrusion die genannte Ummantelung (6) aus verstärkter Glasfaser hergestellt ist.

4. Verfahren zur Herstellung einer Röhre mit Ventilen gemäß Anspruch 2, **dadurch gekennzeichnet, dass** die genannte Ummantelung (6) eine Dicke im Bereich von 1,5 bis 3 mm aufweist.

5. Verfahren zur Herstellung einer Röhre mit Ventilen gemäß Anspruch 1, **dadurch gekennzeichnet, dass** die Durchgangslöcher (4) des genannte Röhrenkörpers (1) gleichzeitig bei der Extrusion des genannten Röhrenkörpers (1) hergestellt werden.

6. Röhre für Injektionen zur Untergrundstabilisierung, umfassend einen Röhrenkörper (1), erhalten durch Extrusion eines plastischen Materials, aufweisend eine Reihe von Löchern (4), die in einigen Bereichen des Röhrenkörpers (1) angeordnet sind, **dadurch gekennzeichnet, dass** sie im Weiteren eine Ummantelung (6) besitzt, welche durchgängig auf der äußeren Oberfläche des genannten Röhrenkörpers (1) mithilfe von Co-Extrusion oder Pull-Extrusion aufgebracht ist, unterteilt durch um den Röhrenkörper angebrachte Durchgangsschlitze (9) in eine Reihe von Ummantelungsabschnitten (6), wobei jeder Abschnitt einen Bohrungsbereich auf dem genannten Röhrenkörper (1) abdeckt, um so ein Ventil zu erhalten, welches den Austritt einer Mischung durch elastische Ausdehnung, induziert durch den hydraulischen Druck, welcher durch die unter Druck stehende Mischung entsteht, ermöglicht sowie ein hermetisches Verschließen, wenn der elastische Druck nachlässt.

7. Röhre gemäß Anspruch 6, **dadurch gekennzeichnet, dass** im Falle von Co-Extrusion die genannte Ummantelung (6) aus elastischem Material, vorzugsweise einem synthetischen elastischen Harz, besteht.

8. Röhre gemäß Anspruch 6, **gekennzeichnet dadurch, dass** im Falle von Pull-Extrusion die genannte Ummantelung (6) aus verstärkter Glasfaser besteht.

9. Röhre gemäß Anspruch 7, **dadurch gekennzeichnet, dass** genannte Ummantelung (6) eine Dicke im Bereich von 1,5 bis 3 mm aufweist.

## Revendications

1. Procédé de fabrication d'un tuyau avec des vannes pour des injections de consolidation du sol du type comportant un corps de tuyau (1), réalisé par extrusion d'un matériau thermoplastique, dont la paroi présente une pluralité de trous traversants (4) pour la sortie de mélanges liquides injectés sous pression à l'intérieur du corps de tuyau (1) et concentrés dans plusieurs zones du corps de tuyau (1), lesdits trous dans le corps de tuyau (1) étant répétés dans des zones successives du corps de tuyau (1) ayant une distance pré-agencée,
**caractérisé en ce qu'**il comprend les étapes consistant à:
- appliquer sur la surface externe du corps de tuyau (1) une gaine continue (6), au moyen d'une co-extrusion ou d'une traction-trusion, sur la surface externe dudit corps de tuyau (1);
- avant et respectivement après chaque groupe de trous sur le corps de tuyau (1), des fentes traversantes circonférentielles (9) sont ménagées dans ladite gaine continue (6) pour obtenir des manchons élastiques entourant et fermant lesdits trous (4).

2. Procédé de fabrication d'un tuyau avec des vannes selon la revendication 1, **caractérisé en ce que** dans le cas de la co-extrusion, ladite gaine (6) est réalisée en un matériau élastique, de préférence en une résine synthétique élastique.

3. Procédé de fabrication d'un tuyau avec des vannes selon la revendication 1, **caractérisé en ce que** dans le cas de la traction-trusion, ladite gaine (6) est réalisée en une fibre de verre renforcée.

4. Procédé de fabrication d'un tuyau avec des vannes selon la revendication 2, **caractérisé en ce que** ladite gaine (6) a une épaisseur comprise entre 1,5 et 3 mm.

5. Procédé de fabrication d'un tuyau avec des vannes selon la revendication 1, **caractérisé en ce que** les trous traversants (4) dudit corps de tuyau (1) sont réalisés simultanément avec l'extrusion dudit corps de tuyau (1).

6. Tuyau pour des injections de consolidation du sol comprenant un corps de tuyau (1) obtenu par l'extrusion d'un matériau plastique, avec une pluralité de trous (4) groupés dans certaines zones d'un corps de tuyau (1),
**caractérisé en ce qu'**il comprend en outre:
une gaine (6) appliquée continuellement à la surface externe dudit corps de tuyau (1) par co-extrusion ou traction-trusion, et divisé au moyen de fentes traversantes circonférentielles (9) en plusieurs pièces de gaine (6), chacune couvrant une zone percée dudit corps de tuyau (1) pour obtenir une vanne permettant la sortie du mélange par dilatation élastique induite par la pression hydraulique produite par le mélange sous pression et en fermant ensuite hermétiquement lorsque la pression élastique s'arrête.

7. Tuyau selon la revendication 6, **caractérisé en ce que** dans le cas de la co-extrusion, ladite gaine (6) est réalisée en un matériau élastique, de préférence en une résine élastique synthétique.

8. Tuyau selon la revendication 6, **caractérisé en ce que** dans le cas de la traction-trusion, ladite gaine (6) est réalisée en une fibre de verre renforcée.

9. Tuyau selon la revendication 7, **caractérisé en ce que** ladite gaine (6) a une épaisseur comprise entre 1,5 et 3 mm.
